(19) Europäisches Patentamt
European Patent Office
Office européen des brevets

(11) EP 3 412 788 B1

(12) **EUROPEAN PATENT SPECIFICATION**

(45) Date of publication and mention of the grant of the patent:
**21.07.2021 Bulletin 2021/29**

(21) Application number: **17770181.0**

(22) Date of filing: **21.03.2017**

(51) Int Cl.:
*C22C 38/00* (2006.01) *C21D 9/46* (2006.01)
*C22C 38/14* (2006.01) *C22C 38/60* (2006.01)
*B21B 1/26* (2006.01) *C21D 8/02* (2006.01)
*C21D 8/04* (2006.01) *C21D 9/48* (2006.01)
*C22C 38/02* (2006.01) *C22C 38/04* (2006.01)
*C22C 38/06* (2006.01) *C22C 38/12* (2006.01)
*C22C 38/18* (2006.01) *C22C 38/38* (2006.01)
*C22C 38/40* (2006.01) *C22C 38/42* (2006.01)
*C23C 2/06* (2006.01) *B32B 15/01* (2006.01)
*C21D 6/00* (2006.01) *C23C 2/02* (2006.01)
*C23C 2/40* (2006.01)

(86) International application number:
**PCT/JP2017/011075**

(87) International publication number:
**WO 2017/164139 (28.09.2017 Gazette 2017/39)**

# (54) HIGH-STRENGTH HOT-ROLLED STEEL SHEET AND METHOD FOR PRODUCING A HIGH-STRENGTH HOT-DIP GALVANIZED STEEL

HOCHFESTES HEISSGEWALZTES STAHLBLECH UND VERFAHREN ZUR HERSTELLUNG EINES HOCHFESTEN FEUERVERZINKTES STAHLBLECH

TÔLE D’ACIER À HAUTE RÉSISTANCE LAMINÉE À CHAUD ET PROCÉDÉ SERVANT À FABRIQUER UNE TÔLE D’ACIER À HAUTE RÉSISTANCE GALVANISÉE PAR IMMERSION À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2016 JP 2016061496**

(43) Date of publication of application:
**12.12.2018 Bulletin 2018/50**

(73) Proprietor: **JFE Steel Corporation**
**Tokyo 100-0011 (JP)**

(72) Inventors:
- **KIZU Taro**
  **Tokyo 100-0011 (JP)**
- **TARIGAN Imanuel**
  **Tokyo 100-0011 (JP)**
- **UTAKA Minoru**
  **Tokyo 100-0011 (JP)**
- **OZAWA Yuichi**
  **Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 143 022**
**EP-A1- 2 826 881**
**JP-A- 2010 126 747**
**JP-A- 2010 126 747**
**JP-A- 2011 046 999**
**JP-A- 2011 046 999**
**JP-A- 2013 032 581**
**JP-A- 2013 076 114**
**JP-A- 2013 237 877**
**JP-A- 2014 224 317**
**JP-A- 2014 224 317**
**JP-A- 2015 214 718**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 412 788 B1

## Description

### Technical Field

The present invention relates to a high-strength hot-dip galvanized steel sheet optimum for structural members for use in underbody parts, such as lower arms and frames, structural parts, such as pillars and members, and reinforcing members therefor, door impact beams, and sheet members of automobiles, vending machines, desks, household electrical appliances and office automation equipment, and construction materials, and to a method for producing the high-strength hot-dip galvanized steel sheet.

### Background Art

With a growing interest in global environment, there is an increasing demand for the reduction of $CO_2$ emissions. In the automotive field, there is an increasing demand for reduction of vehicle weight to improve mileages while controlling exhaust emission. There is also a great demand for the crash safety of automobiles. Using parts with thinner wall is most effective for the reduction of vehicle weight. More specifically, to reduce vehicle weight while maintaining strength, it is effective to strengthen steel sheets serving as materials for automotive parts and thereby decrease the thickness of the steel sheets. Thus, the thicknesses of hot-rolled steel sheets, which comparatively have greater thicknesses than cold-rolled steel sheets, are also being decreased by employing high-strength steel sheets.

In general, workability deteriorates with high-strengthening. Furthermore, thinner steel sheets are more affected by corrosion as the thickness is decreased thereby. Thus, there is a great demand for high-strength hot-dip galvanized steel sheets with high workability. However, higher-strength steel sheets are more often subjected to an easier type of forming, mainly bending. Furthermore, bending of a blank cut by punching a high-strength steel sheet tends to cause cracks starting from an end portion of the steel sheet because the steel sheets are high-strengthened. This tendency is marked in high-strength hot-dip galvanized steel sheets.

In conventional art, the following high-strength hot-dip galvanized steel sheets with high bendability are known. For example, Patent Literature 1 discloses a technique for producing a high-strength hot-rolled steel sheet, which contains, on a mass percent basis, C: 0.01% to 0.3%, Si: 1.0% or less, Mn: 3.0% or less, P: 0.5% or less, and Ti: 0.03% to 0.3% and has a microstructure composed of a main phase of ferrite and a second phase. The ferrite has an average grain size of 3.5 μm or less, and the second phase has an average grain size of 3.5 μm or less. The second phase is composed of 70% or more by volume martensite and 2% or more by volume austenite.

For example, Patent Literature 2 discloses a technique for producing a hot-rolled steel sheet, which contains, on a mass percent basis, C: 0.03% to 0.12%, Si: 0.01% to 0.5%, Mn: 1.4% to 5.0%, P: 0.05% or less, S: 0.010% or less, sol. Al: 0.001% to 0.5%, and N: 0.020% or less, wherein ferrite constitutes 30% to 94% by volume, bainite constitutes 5% to 69% by volume, and retained austenite and martensite constitute 1.0% to 10% by volume in total. The retained austenite and martensite have a maximum diameter of 7 μm or less. The retained austenite and martensite have a number density of 20 /100 $\mu m^2$ or less. The hot-rolled steel sheet has a tensile strength of 500 MPa or more, a yield ratio of 70% or more, a TS x El of 12000 MPa-% or more, which is the product of tensile strength and total elongation, and a TS x $\lambda$ of 50000 MPa-% or more, which is the product of tensile strength and hole expanding ratio.

For example, Patent Literature 3 discloses a technique for producing a hot-rolled steel sheet, which contains, on a mass percent basis, C: 0.03% to 0.12%, Si: 0.005% to 0.5%, Mn: more than 2.0% and 3.0% or less, P: 0.05% or less, S: 0.005% or less, sol. Al: 0.001% to 0.100%, and N: 0.0050% or less, wherein ferrite constitutes a main phase, and bainite, martensite, and retained austenite constitute 5% or less (including 0%) by volume in total. The ferrite has an average grain size of 7 μm or less. The hot-rolled steel sheet has a tensile strength of 590 MPa or more, a yield ratio of 70% or more, and a hole expanding ratio of 90% or more.

For example, Patent Literature 4 discloses a technique for producing a hot-rolled steel sheet, which contains, on a mass percent basis, C: 0.03% to 0.35%, Si: 0.01% to 2.0%, Mn: 0.3% to 4.0%, P: 0.001% to 0.10%, S: 0.0005% to 0.05%, N: 0.0005% to 0.010%, and Al: 0.01% to 2.0%, wherein a bainite phase constitutes more than 10% by area, a ferrite phase constitutes more than 20% by area, and a pearlite phase constitutes less than 10% by area, and bainite grains cover more than 30% of ferrite grains.

In the techniques described in Patent Literature 1 to Patent Literature 4, however, punched members have low bendability for large punching clearances in particular.

Patent Literature 5 discloses a high strength steel sheet having excellent shape fixability and a method for manufacturing the same.

Citation List

Patent Literature

PTL 1: Japanese Unexamined Patent Application Publication No. 2000-212686
PTL 2: Japanese Unexamined Patent Application Publication No. 2011-241456
PTL 3: Japanese Unexamined Patent Application Publication No. 2012-36441
PTL 4: Japanese Unexamined Patent Application Publication No. 2015-63731
PTL 5: European Application EP2 826 881 A1

Summary of Invention

Technical Problem

In view of such situations, the present invention aims to provide a high-strength hot-dip galvanized steel sheet with high bendability of punched members and a method for producing the high-strength hot-dip galvanized steel sheet.
Solution to Problem

Extensive studies have been performed to solve such problems. As a result, the following have been found. The bendability of punched members is improved probably by the following mechanism, although the mechanism does not specify the present invention. Ferrite with high workability is strengthened by precipitation strengthening, and a second phase containing bainite and/or martensite is dispersed.
The stress concentration in punching is reduced when the phase containing bainite and/or martensite has an average grain size of 3.0 μm or less and when the ratio of the average grain size of the phase containing bainite and/or martensite to the average grain size of ferrite is 0.3 or less. This reduces the occurrence of cracks starting from a boundary between precipitation-strengthened ferrite and the second phase containing bainite and/or martensite. In bending, a fine second phase reduces the yield ratio and accordingly reduces strain. Thus, the bendability of punched members can be greatly improved.

In the present invention, a steel slab with controlled C, Si, Mn, P, S, Al, N, Ti, Nb, and V contents is hot-rolled at a controlled rolling temperature and at a controlled rolling reduction, the cooling rate and coiling temperature are controlled in cooling after hot rolling, a hot-rolled coil is pickled and is subjected to annealing and hot-dip galvanizing at a controlled soaking temperature for a controlled soaking time, and the annealed steel sheet is cooled at a controlled cooling rate, thereby controlling the area percentages and average grain sizes of ferrite, bainite, and martensite. The area percentages and average grain sizes of ferrite, bainite, and martensite can be controlled to significantly improve the bendability of punched members of a high-strength hot-dip galvanized steel sheet.

The present invention is based on these findings and is as set forth in the appended claims.

The term "a high-strength hot-dip galvanized steel sheet", as used herein, refers to a steel sheet with a tensile strength (TS) of 550 MPa or more and includes a hot-dip galvanized hot-rolled steel sheet subjected to alloying treatment. The term "high bendability", as used herein, refers to high bending workability in forming after punching. Advantageous Effects of Invention

The present invention provides a high-strength hot-rolled steel sheet for producing a high-strength hot-dip galvanized steel sheet with high bendability. A high-strength hot-rolled steel sheet for producing a high-strength hot-dip galvanized steel sheet according to the present invention has a tensile strength of 550 MPa or more and has significantly improved bendability when used as punched members. Thus, a high-strength hot-rolled steel sheet for producing a high-strength hot-dip galvanized steel sheet according to the present invention is suitable for automobile structural members and thereby industrially advantageous effects are produced.

Brief Description of Drawings

[Fig. 1] Fig. 1 is a graph showing the relationship between the total area percentage of bainite and martensite and the critical bend radius/thickness ratio.
[Fig. 2] Fig. 2 is a graph showing the relationship between the average ferrite grain size and the critical bend radius/thickness ratio.
[Fig. 3] Fig. 3 is a graph showing the relationship between the average grain size of a phase containing bainite and martensite divided by the average ferrite grain size and the critical bend radius/thickness ratio.

Description of Embodiments

The present invention will be described in detail below. Unless otherwise specified, % hereinafter represents % by mass.

First, the reasons for limiting the composition of a high-strength steel sheet according to the present invention will be described below.

C: 0.05% to 0.15%

C, together with Ti, Nb, or V, forms fine carbide, increases the strength of ferrite, and thereby contributes to strengthening of the steel. Furthermore, C can decrease the difference in hardness between ferrite and a second phase composed of bainite and martensite, and decrease the occurrence of voids in punching. C can also promote the formation of bainite or martensite, thereby decreasing the yield ratio, and decrease the strain concentration in bending. Such effects require a C content of 0.05% or more, preferably 0.07% or more. A high C content, however, increases the area percentage of bainite or martensite, and also increases the hardness of bainite or martensite. This not only increases the occurrence of voids in punching but also increases the formation of cementite, thus greatly reducing toughness and reducing weldability. Thus, the C content should be 0.15% or less, preferably 0.13% or less, more preferably 0.11% or less.

Si: 0.1% or less

Si forms Si oxide on the surface of steel sheets and causes surface defects, such as an uncoated area. Thus, the Si content should be 0.1% or less, preferably 0.05% or less, more preferably 0.03% or less. The limit of Si content is not particularly limited but is preferably 0.005% as incidental impurities.

Mn: 1.0% to 2.0%

Mn retards the start of ferrite transformation to suppress the growth of ferrite grains, thus being effective in grain refining. Mn can also contribute to strengthening of steel due to solid-solution strengthening. Mn also converts harmful S in steel into harmless MnS. Such effects require a Mn content of 1.0% or more, preferably 1.2% or more. A high Mn content, however, causes cracks in slabs, retards ferrite transformation, and excessively increases the area percentage of bainite or martensite. Thus, the Mn content should be 2.0% or less, preferably 1.5% or less.

P: 0.10% or less

P reduces weldability and reduces the ductility, bendability, and toughness of steel sheets due to segregation at grain boundaries. Thus, the P content should be 0.10% or less, preferably 0.05% or less, more preferably 0.03% or less, still more preferably 0.01% or less. However, an excessive decrease in P content causes an increase in production costs. Thus, the lower limit of P content is preferably 0.001%.

S: 0.030% or less

S reduces weldability and also greatly reduces ductility in hot rolling. Thus, S causes hot tearing and considerably reduces the surface quality of steel sheets. S makes a negligible contribution to the strength of steel sheets. Furthermore, as an impurity element, S forms coarse sulfide and thereby reduces the ductility, bendability, and stretch-flangeability of steel sheets. These problems are noticeable at a S content of more than 0.030%, and the S content should be minimized. Thus, the S content should be 0.030% or less, preferably 0.010% or less, more preferably 0.003% or less, still more preferably 0.001% or less. However, an excessive decrease in S content causes an increase in production costs. Thus, the lower limit of S content is preferably 0.0001%.

Al: 0.10% or less

The addition of a large amount of Al greatly reduces the toughness and weldability of steel sheets. Furthermore, Al oxide tends to form on the surface of steel sheets and tends to cause defects, such as an uncoated area. Thus, the Al content should be 0.10% or less, preferably 0.06% or less. Although the Al content has no lower limit, an Al content of 0.01% or more in Al killed steel causes no problems.

N: 0.010% or less

N, together with Ti, Nb, or V, forms coarse nitride at high temperatures. However, coarse nitride does not contribute significantly to the strength of steel sheets. Thus, N not only reduces the strengthening effects of Ti, Nb, and V but also reduces the toughness of steel sheets. A higher N content is more likely to cause cracks in slabs in hot rolling. Thus, the N content should be 0.010% or less, preferably 0.005% or less, more preferably 0.003% or less, still more preferably 0.002% or less. However, an excessive decrease in N content directly causes an increase in production costs. Thus, the lower limit of N content is preferably 0.0001%.

Ti, Nb, V: one or two or more of Ti, Nb, and V satisfy the formula (1)

$$0.008\% \leq 12 \times (Ti/48 + Nb/93 + V/51) \leq 0.05\% \quad (1)$$

Here, Ti, Nb, and V denote their respective contents (% by mass). In the absence of Ti, Nb, or V, the corresponding content is 0.

Ti, Nb, and V, together with C, form fine carbide, not only contribute to grain refining and strengthening of steel sheets, but also decrease the difference in hardness of ferrite from those of bainite and martensite through hardening of the ferrite phase. This reduces the occurrence of cracks in punching and contributes to improved bendability of members in bending. One or two or more of Ti, Nb, and V contents resulting in less than 0.008% in the formula (1) result in insufficient grain refining and a large ferrite grain size. Thus, one or two or more of Ti, Nb, and V should satisfy 0.008% or more, preferably 0.01% or more, of the formula (1). On the other hands, one or two or more of Ti, Nb, and V contents resulting in more than 0.05% in the formula (1) do not significantly improve strengthening of steel sheets or the bendability of punched members, but reduce toughness due to a large amount of fine precipitates. This also increases the ratio of the average grain size of the phase containing bainite and martensite to the average grain size of ferrite due to the grain refining of ferrite. Thus, the Ti, Nb, and V contents should satisfy 0.05% or less, preferably 0.03% or less, more preferably 0.02% or less, in the formula (1). The suitable Ti, Nb, and V contents are Ti: 0.01% to 0.20%, Nb: 0.01% to 0.20%, and V: 0.01% to 0.20%. More preferably, Ti: 0.03% to 0.15%, Nb: 0.03% to 0.15%, and V: 0.03% to 0.15%.

The remainder is composed of iron and incidental impurities. The incidental impurities include Sn, Mg, Co, As, Pb, Zn, and O and constitute 0.1% or less in total.

A steel sheet containing these essential elements according to the present invention has the intended characteristics. A steel sheet according to the present invention can contain the following elements as required, in addition to the essential elements to improve the strength of the steel sheet and to improve the bendability of punched members.

B: 0.0005% to 0.0030%

B segregates at grain boundaries, retards ferrite transformation, and thereby contributes to increased strength. B can also have an effect on grain refining in a microstructure and contribute to improved bendability of punched members. To produce such effects, B, if present at all, constitutes 0.0005% or more, preferably 0.0010% or more. A high B content, however, results in increased rolling force in hot rolling. Thus, B, if present at all, preferably constitutes 0.0030% or less, more preferably 0.0020% or less.

One or two or more of Mo, Ta, and W: 0.005% to 0.10% each

Mo, Ta, and W can form fine precipitates and thereby contribute to strengthening of steel sheets and improved bendability of punched members. To produce such effects, one or two or more of Mo, Ta, and W, if present at all, constitute 0.005% or more each, preferably 0.010% or more each. High Mo, Ta, and W contents, however, do not have further effects and result in low toughness of steel sheets and low bendability after punching due to precipitation of a large amount of fine precipitates. Thus, one or two or more of Mo, Ta, and W, if present at all, preferably constitute 0.10% or less each, more preferably 0.050% or less each.

One or two or more of Cr, Ni, and Cu: 0.01% to 0.5% each

Cr, Ni, and Cu cause grain refining in a microstructure of steel sheets, act as solid-solution strengthening elements, and thereby contribute to strengthening of steel sheets and improved bendability of punched members. To produce such effects, one or two or more of Cr, Ni, and Cu, if present at all, constitute 0.01% or more each, preferably 0.02% or more each. High Cr, Ni, and Cu contents, however, do not have further effects and result in increased production costs. Thus, one or two or more of Cr, Ni, and Cu, if present at all, preferably constitute 0.5% or less each, more preferably 0.3% or less each.

One or both of Ca and REM: 0.0005% to 0.01% each

Ca and REM can control the morphology of sulfide and improve the ductility, toughness, bendability, and stretch-flangeability of steel sheets. To produce such effects, one or both of Ca and REM, if present at all, constitute 0.0005% or more each, preferably 0.0010% or more. High Ca and REM contents, however, do not have further effects and result in increased production costs. Thus, one or both of Ca and REM, if present at all, preferably constitute 0.01% or less each, more preferably 0.0050% or less each.

Sb: 0.005% to 0.030%

Sb segregates on the surface of steel sheets in hot rolling, can prevent nitriding of slabs, can reduce the formation of coarse nitride, and can improve toughness. To produce such effects, Sb, if present at all, constitutes 0.005% or more, preferably 0.008% or more. A high Sb content, however, results in increased production costs. Thus, Sb, if present at all, preferably constitutes 0.030% or less, more preferably 0.020% or less.

Then, microstructures and the same, which is an important factor of a high-strength hot-dip galvanized steel sheet according to the present invention, will be described below. The area percentage is hereinafter based on all the microstructures in a steel sheet.

Ferrite: 80% or more by area

Ferrite has high ductility and bendability. Therefore, in the present invention, ferrite constitutes 80% or more by area, preferably 90% or more, more preferably 95% or more. The area percentage of ferrite can be determined by the method described later in the examples. The area percentage of ferrite can be adjusted to be 80% or more by controlling the production conditions, particularly the cooling rate in cooling and the coiling temperature.

Bainite and martensite in total: 1% to 20% by area

A bainite phase and a martensite phase formed can decrease yield ratio. This can reduce strain in bending and improve bendability. Thus, the total area percentage of the bainite phase and the martensite phase is 1% or more, preferably 3% or more. Large area percentages of the bainite phase and the martensite phase, however, result in not only low formability but also an increased occurrence of cracks in punching and low bendability of punched members. Thus, the total area percentage of the bainite phase and the martensite phase is 20% or less, preferably 15% or less, more preferably 10% or less. In the present invention, bainite and martensite may exist alone or in combination. The area percentage of each of bainite and martensite can be determined by the method described later in the examples. The total area percentage of the bainite phase and the martensite phase can be adjusted to be 1% to 20% by controlling the production conditions, particularly the cooling rate in cooling.

In the present invention, microstructures other than ferrite, bainite, and martensite may include pearlite and retained austenite.

Average grain size of ferrite: 10.0 μm or less

A large ferrite grain size causes occurrence of cracks in punching due to stress concentration and results in low bendability of members. Thus, ferrite has an average grain size of 10.0 μm or less, preferably 7.0 μm or less, more preferably 5.0 μm or less. The average grain size of ferrite can be determined by the method described later in the examples. The average grain size of ferrite can be controlled by the production conditions, particularly cumulative rolling reduction ratio or finishing temperature in hot rolling.

Average grain size of phase containing bainite and martensite: 3.0 μm or less

Large grain sizes of bainite and martensite causes occurrence of cracks in punching due to stress concentration and result in low bendability of members. Thus, the phase containing bainite and martensite has an average grain size of 3.0 μm or less, preferably 2.0 μm or less, more preferably 1.0 μm or less. In the present invention, in the phase containing bainite and martensite, bainite and martensite may exist alone or in combination. The average grain size of the phase containing bainite and martensite can be determined by the method described later in the examples. The average grain size of the phase containing bainite and martensite can be controlled by the production conditions, particularly cumulative rolling reduction ratio or finishing temperature in hot rolling.

The ratio of the average grain size of the phase containing bainite and martensite to the average grain size of ferrite: 0.3 or less

If the phase containing bainite and martensite has a greater grain size than that of ferrite, stress concentration around the bainite and martensite causes cracks in punching. This reduces the bendability of punched members. Thus, the ratio of the average grain size of the phase containing bainite and martensite to the average grain size of ferrite is 0.3 or less, preferably 0.2 or less, more preferably 0.1 or less. The ratio of the average grain size of the phase containing bainite and martensite to the average grain size of ferrite can be determined by the method described later in the examples. The ratio of the average grain size of the phase containing bainite and martensite to the average grain size of ferrite can be controlled by the production conditions.

Subsequently, a method for producing a high-strength hot-dip galvanized steel sheet according to the present invention will be described below.

A high-strength hot-dip galvanized steel sheet according to the present invention is produced by casting a steel slab with the above composition, and direct-rolling the steel slab or reheating the steel slab to 1150°C or more, then performing hot rolling, the hot rolling including rough rolling and finish rolling, the finish rolling being performed at a cumulative rolling reduction ratio of 0.7 or more at 1000°C or less, at a rolling reduction ratio of 0.10 to 0.25 in the final pass, and at a finishing temperature of 820°C to 950°C, within 2 seconds after the finish rolling, performing cooling to 650°C at an average cooling rate of 30°C/s or more, then performing coiling at a coiling temperature of 400°C to 620°C to form a hot-rolled steel sheet, pickling the hot-rolled steel sheet, then annealing the steel sheet at a soaking temperature of 700°C to 880°C for a soaking time of 10 to 300 seconds, then cooling the steel sheet, the average cooling rate in the temperature range of the soaking temperature to 500°C being 5°C/s to 20°C/s, and then dipping the steel sheet in a plating bath at 420°C to 500°C to perform a hot-dip galvanizing treatment. After the hot-dip galvanizing treatment, an alloying treatment may be performed at an alloying treatment temperature in the range of 460°C to 600°C for a holding time of 1 second or more. The high-strength hot-dip galvanized steel sheet thus produced may be processed at a thickness reduction rate in the range of 0.1% to 3.0%.

The production method is further described in detail below.

In the present invention, molten steel can be produced by any method, for example, by a known melting method for producing the molten steel using such as a converter or an electric furnace. Secondary defining may also be performed in a vacuum degassing furnace. After that, from the perspective of productivity and quality, a slab (steel) is produced by a continuous casting process. A slab may also be produced by a known casting process, such as an ingot casting and slabbing process or a thin slab continuous casting process.

Slab after casting: After casting, a slab is direct-rolled, or a warm or cold slab is reheated to 1150°C or more.

In order to obtain fine precipitation of Ti, Nb, and V, these elements must be dissolved in steel before hot rolling. Thus, after casting, a slab is preferably directly conveyed at high temperatures to an inlet of a hot rolling mill and is subjected to hot rolling (hot direct rolling). However, if a slab after casting becomes a warm or cold piece, and Ti, Nb, or V precipitates, the slab is necessary to be reheated to 1150°C or more to redissolve Ti, Nb, and V before rough rolling. A low slab heating temperature inhibits redissolution of Ti, Nb, and V, thus leaving coarse carbide as it is and suppressing the formation of fine carbide. The holding time at 1150°C or more is preferably, but not limited to, 10 minutes or more, more preferably 30 minutes or more. For operation, the holding time is preferably 150 minutes or less. The reheating temperature is preferably 1200°C or more. For operation, the reheating temperature is preferably 1300°C or less.

Hot rolling: In finish rolling after rough rolling, the cumulative rolling reduction ratio at 1000°C or less is 0.7 or more, the rolling reduction ratio in the final pass ranges from 0.10 to 0.25, and the finishing temperature ranges from 820°C to 950°C.

Cumulative rolling reduction ratio at 1000°C or less in finish rolling: 0.7 or more

In finish rolling, a large rolling reduction ratio at low temperatures can decrease the grain size of hot-rolled steel sheets. This can also decrease the grain size of steel sheets after annealing. Thus, the cumulative rolling reduction ratio at 1000°C or less is 0.7 or more, preferably 1.0 or more, more preferably 1.3 or more, still more preferably 1.6 or more. The cumulative rolling reduction ratio has no upper limit but is preferably 2.0 or less. The cumulative rolling reduction ratio in the finish rolling is the sum of the rolling reduction ratios in rolling mills at 1000°C or less. A Rolling reduction ratio in a rolling mill refers to true strain represented by the following formula (2). The sum of the rolling reduction ratios in rolling mills refers to the sum of the true strains in the rolling mills.

$$\text{True strain} = -\ln(1 - (t_0 - t_1)/t_0) \qquad (2)$$

$t_0$: thickness (mm) at the inlet of a rolling mill, $t_1$: thickness (mm) at the outlet of the rolling mill

Rolling reduction ration in final pass: 0.10 to 0.25

A small rolling reduction ratio in the final pass promotes the formation of bainite and martensite and increases the ratio of the average grain size of the phase containing bainite and martensite to the average grain size of ferrite in hot-rolled steel sheets, and therefore the ratio remains high after annealing. Thus, the rolling reduction ratio in the final pass is 0.10 or more, preferably 0.13 or more. A large rolling reduction ratio in the final pass results in a small ferrite grain size in particular and increases a high ratio of the average grain size of the phase containing bainite and martensite to the average grain size of ferrite in hot-rolled steel sheets. Therefore the ratio remains high in steel sheets after annealing. Thus, the rolling reduction ratio in the final pass is 0.25 or less, preferably 0.22 or less. The final pass may be included in the process for "the cumulative rolling reduction ratio of 0.7 or more at 1000°C or less in the finish rolling".

Finishing temperature: 820°C to 950°C

A low finishing temperature causes ferrite transformation during hot rolling and results in a large ferrite grain size of hot-rolled steel sheets. This also increases the ferrite grain size after annealing. Thus, the finishing temperature is 820°C or more, preferably 850°C or more, more preferably 880°C or more. A high finishing temperature promotes grain growth and increases the ferrite grain size of hot-rolled steel sheets. This also increases the ferrite grain size of steel sheets after annealing. Thus, the finishing temperature is 950°C or less, preferably 930°C or less.

Within 2 seconds after finish rolling, cooling to 650°C at an average cooling rate of 30°C/s or more

Cooling start time after finish rolling: within 2 seconds

A late cooling (for example, water cooling) start time after the finish rolling enables recovery of strain introduced during hot rolling, increases the grain size of hot-rolled steel sheets, and increases the grain size of steel sheets after annealing. Thus, the water cooling start time after the finish rolling is 2 seconds or less.

Average cooling rate in cooling to 650°C from start of cooling: 30°C/s or more

Lower cooling rate to 650°C from the start of cooling causes ferrite transformation at high temperatures, increases the grain size of hot-rolled steel sheets, and increases the grain size of steel sheets after annealing. Thus, the average cooling rate in cooling to 650°C from the start of cooling is 30°C/s or more, preferably 50°C/s or more, more preferably 80°C/s or more. The average cooling rate has no upper limit but is preferably 200°C/s or less in terms of temperature control.

Coiling at coiling temperature of 400°C to 620°C

Coiling temperature: 400°C to 620°C

A high coiling temperature promotes ferrite transformation, increases the ferrite grain size of hot-rolled steel sheets, and increases the grain size of steel sheets after annealing. Thus, the coiling temperature is 620°C or less, preferably 600°C or less. A low coiling temperature results in large martensite grains and increases the grain size of steel sheets after annealing. Thus, the coiling temperature is 400°C or more, preferably 450°C or more, more preferably 500°C or more.

Pickling after coiling (suitable condition)

A hot-rolled steel sheet thus produced is subjected to pickling. Any pickling method may be employed. Hydrochloric acid pickling or sulfuric acid pickling may be employed. Pickling removes scales from the surface of steel sheets. Pickling improves adhesion of coating in a hot-dip galvanizing treatment.

After pickling, annealing at soaking temperature of 700°C to 880°C for soaking time of 10 to 300 seconds

Soaking temperature: 700°C to 880°C

After the pickling, annealing is performed at a soaking temperature in the range of 700°C to 880°C. A low soaking temperature results in insufficient strain recovery of hot-rolled steel sheets, resulting in not only low bendability but also the occurrence of an uncoated area. Thus, the soaking temperature is 700°C or more. A high soaking temperature promotes grain growth during soaking and increases the grain size of steel sheets after annealing. Thus, the soaking temperature is 880°C or less, preferably 850°C or less.

Soaking time: 10 to 300 seconds

A short soaking time results in insufficient strain recovery of hot-rolled steel sheets, resulting in not only low bendability but also poor operational stability. Thus, the soaking time is 10 seconds or more, preferably 30 seconds or more. A long soaking time promotes grain growth during soaking and increases the grain size of steel sheets after cooling. Thus, the soaking time is 300 seconds or less, preferably 150 seconds or less, more preferably 100 seconds or less. Here, the term "soaking time" refers to the time during which a steel sheet passes through a soaking temperature region with a temperature in the range of 700°C to 880°C.

After annealing, cooling to 500°C at an average cooling rate of 5°C/s to 20°C/s

Average cooling rate in cooling to 500°C after annealing: 5°C/s to 20°C/s

Lower cooling rate after annealing promotes grain growth. Thus, the average cooling rate in cooling to 500°C after annealing, that is, the average cooling rate in the temperature range of the soaking temperature to 500°C is 5°C/s or more, preferably 10°C/s or more. A high cooling rate after annealing promotes bainite or martensite transformation and decreases the area percentage of ferrite. Thus, the average cooling rate in cooling to 500°C after annealing is 20°C/s or less, preferably 16°C/s or less.

Hot-dip galvanizing treatment

Plating bath temperature: 420°C to 500°C

After an annealing, a hot-dip galvanizing treatment is performed in a plating bath. In the hot-dip galvanizing treatment, the plating bath temperature preferably ranges from 420°C to 500°C. Zinc does not melt at a plating bath temperature of less than 420°C. A plating bath temperature of more than 500°C excessively promotes alloying of coating.

In this manner, a high-strength hot-dip galvanized steel sheet according to the present invention is produced. The finishing temperature, coiling temperature, and soaking temperature are the surface temperatures of steel sheets. The average cooling rate in cooling to 650°C after finish rolling and the average cooling rate in cooling to 500°C after annealing are based on the surface temperature of steel sheets.

After hot-dip galvanizing treatment, alloying treatment at an alloying treatment temperature of 460°C to 600°C for a holding time of 1 second or more (suitable conditions)

After the hot-dip galvanizing treatment, reheating at a reheating temperature of 460°C to 600°C for 1 second or more provides a galvannealed steel sheet. A reheating temperature of less than 460°C results in insufficient alloying. A reheating temperature of more than 600°C causes excessively alloying. A holding time of less than 1 second results in insufficient alloying. The reheating temperature is expressed in terms of the surface temperature of steel sheets.

Processing with a thickness reduction rate of 0.1% to 3.0%

A high-strength hot-dip galvanized steel sheet thus produced may be subjected to light processing to increase mobile dislocation and to reduce stress concentration in punching, thereby improving the bendability of punched members. To produce this effect, light processing is preferably performed at a thickness reduction rate of 0.1% or more, more preferably 0.5% or more, still more preferably 1.0% or more. A high thickness reduction rate, however, results in low bendability due to increased dislocation. Thus, light processing is preferably performed at a thickness reduction rate of 3.0% or less, more preferably 2.0% or less, still more preferably 1.5% or less. The light processing may be rolling reduction of steel sheets with a rolling roll or stretch processing of steel sheets under tension. The light processing may also be combined processing of rolling and stretching.

EXAMPLES

The present invention will be described below with examples. However, the present invention is not limited to these examples.

Molten steel with the composition listed in Table 1 was produced by a typical known method and was continuously cast into a steel slab. The slab was hot-rolled, cooled, and coiled under the production conditions listed in Table 2 to form a hot-rolled steel sheet. The hot-rolled steel sheet was pickled (hydrochloric acid concentration: 10% by volume, temperature: 80°C) and was subjected to annealing and plating treatment under the conditions listed in Table 2.

Test specimens were taken from the high-strength hot-dip galvanized steel sheet thus produced and were tested and estimated as described below.

Area percentages of ferrite, bainite, and martensite

A cross section of a test specimen parallel to the rolling direction and the thickness direction was embedded, polished, and etched with nital. The area percentages of ferrite, bainite, and martensite were determined by taking three photographs of a 100 μm x 100 μm region of the cross section, the center of the region being at a quarter thickness, with a scanning electron microscope (SEM) at a magnification of 1000 and by image-processing the SEM photographs.

Average grain sizes of ferrite, bainite, and martensite

A cross section of a test specimen parallel to the rolling direction and the thickness direction was embedded, polished, and etched with nital. Three portions in a 100 μm x 100 μm region of the cross section, the center of the regions being at a quarter thickness, were measured by EBSD with a measurement step of 0.1 μm. A grain boundary was defined by an azimuthal error of 15 degrees or more. The equivalent circular diameter was calculated from the area of each microstructure. The average of the equivalent circular diameters was considered to be the average grain size.

Mechanical Characteristics

For the tensile test, JIS 5 tensile test pieces were taken along a direction perpendicular to the rolling direction, subjected to tensile test and were measured in terms of the yield strength (YP), tensile strength (TS), and total elongation (El) according to JIS Z 2241. These mechanical characteristics of the steel sheet were measured twice and averaged. A TS of 550 MPa or more was rated as high-strength.

Bending Test

A 35 mm x 100 mm sheet was punched out at a clearance of 20%. The longitudinal direction of the sheet was perpendicular to the rolling direction. A 90-degree bending test was performed with a surface on the burr side facing inward. The pressing load ranged from 5 to 10 tons, and the pressing speed was 50 mm/min. The minimum radius of the front end of a V-bending punch was determined that caused no cracks on the top of the V-bended portion near the punched surface. The top of the V-bended portion was visually inspected for cracks. The bending test was performed three times. When no cracks were observed in the three measurements (referred to as "no cracks"), the minimum radius of the front end of the punch defined to be the critical bend radius. The critical bend radius/thickness ratio was determined from the critical bend radius (mm) and the thickness (mm) listed in Table 3. A critical bend radius/thickness ratio of 2.0 or less was rated as high bending workability. Table 3 shows the results.

[Table 1]

| Steel No. | Chemical composition (mass%) | | | | | | | | | | | Formula (1) |
|---|---|---|---|---|---|---|---|---|---|---|---|---|
| | C | Si | Mn | P | S | Al | N | Ti | Nb | V | Others | |
| 1 | 0.13 | 0.02 | 1.8 | 0.05 | 0.008 | 0.04 | 0.005 | 0.12 | - | 0.05 | - | 0.042 |
| 2 | 0.08 | 0.01 | 1.2 | 0.01 | 0.002 | 0.03 | 0.004 | 0.11 | - | 0.12 | - | 0.056 |
| 3 | 0.08 | 0.02 | 1.5 | 0.02 | 0.002 | 0.05 | 0.004 | 0.02 | 0.04 | - | - | 0.010 |
| 4 | 0.11 | 0.02 | 1.8 | 0.02 | 0.008 | 0.03 | 0.005 | 0.05 | 0.03 | - | Sb=0.009 | 0.016 |
| 5 | 0.13 | 0.03 | 1.9 | 0.02 | 0.002 | 0.02 | 0.004 | 0.05 | - | - | Mo=0.10 | 0.013 |
| 6 | 0.12 | 0.03 | 1.3 | 0.01 | 0.011 | 0.06 | 0.006 | 0.03 | - | - | Mo=0.10 | 0.008 |
| 7 | 0.12 | 0.03 | 1.4 | 0.01 | 0.005 | 0.05 | 0.005 | 0.03 | 0.03 | - | B=0.0012, Cr=0.2, Sb=0.015 | 0.011 |
| 8 | 0.12 | 0.02 | 1.2 | 0.01 | 0.022 | 0.04 | 0.003 | 0.05 | 0.05 | - | Cr=0.2, Ni=0.2 | 0.019 |
| 9 | 0.08 | 0.02 | 2.1 | 0.03 | 0.002 | 0.05 | 0.003 | 0.08 | - | - | - | 0.020 |
| 10 | 0.16 | 0.03 | 1.3 | 0.05 | 0.011 | 0.03 | 0.004 | 0.07 | - | - | Cr=0.3 | 0.018 |
| 11 | 0.12 | 0.03 | 1.2 | 0.03 | 0.002 | 0.04 | 0.005 | 0.02 | 0.01 | - | - | 0.006 |
| 12 | 0.11 | 0.01 | 2.0 | 0.06 | 0.003 | 0.03 | 0.004 | 0.08 | 0.05 | 0.02 | B=0.0005, Mo=0.01, Ta=0.01, W=0.01, Cr=0.03, Ni=0.05, Cu=0.05, Ca=0.0010, REM=0.0010, Sb=0.010 | 0.031 |
| 13 | 0.14 | 0.01 | 1.3 | 0.03 | 0.011 | 0.06 | 0.004 | 0.04 | - | 0.04 | Mo=0.10, Ca=0.0010 | 0.019 |
| 14 | 0.08 | 0.03 | 1.3 | 0.01 | 0.002 | 0.05 | 0.005 | 0.03 | 0.02 | - | B=0.0015 | 0.010 |
| 15 | 0.06 | 0.02 | 1.5 | 0.05 | 0.002 | 0.05 | 0.005 | 0.06 | 0.02 | - | Ta=0.10, Cr=0.1 | 0.018 |
| 16 | 0.06 | 0.05 | 1.1 | 0.02 | 0.018 | 0.04 | 0.004 | 0.12 | - | 0.08 | - | 0.049 |
| 17 | 0.09 | 0.01 | 1.4 | 0.01 | 0.001 | 0.03 | 0.004 | 0.09 | - | - | - | 0.023 |
| 18 | 0.09 | 0.02 | 1.4 | 0.02 | 0.003 | 0.04 | 0.002 | - | - | 0.12 | Cr=0.3, Ni=0.1, Cu=0.2 | 0.028 |
| 19 | 0.08 | 0.01 | 1.5 | 0.03 | 0.003 | 0.04 | 0.004 | 0.08 | - | 0.05 | B=0.0010 | 0.032 |
| 20 | 0.10 | 0.05 | 1.4 | 0.01 | 0.005 | 0.06 | 0.006 | 0.04 | - | 0.02 | - | 0.015 |
| 21 | 0.11 | 0.01 | 1.3 | 0.02 | 0.006 | 0.05 | 0.003 | 0.07 | - | - | Sb=0.011 | 0.018 |
| 22 | 0.09 | 0.02 | 1.2 | 0.01 | 0.002 | 0.04 | 0.004 | 0.08 | - | - | Ca=0.0015 | 0.020 |
| 23 | 0.08 | 0.01 | 1.4 | 0.02 | 0.001 | 0.03 | 0.004 | - | 0.06 | - | - | 0.008 |
| 24 | 0.15 | 0.02 | 1.1 | 0.06 | 0.003 | 0.06 | 0.002 | 0.04 | 0.02 | - | Cr=0.2 | 0.013 |

(continued)

| Steel No. | Chemical composition (mass%) | | | | | | | | | | | Formula (1) |
|---|---|---|---|---|---|---|---|---|---|---|---|---|
| | C | Si | Mn | P | S | Al | N | Ti | Nb | V | Others | |
| 25 | 0.05 | 0.05 | 1.9 | 0.02 | 0.028 | 0.05 | 0.008 | 0.05 | - | 0.03 | B=0.0010 | 0.020 |
| 26 | 0.09 | 0.01 | 1.5 | 0.01 | 0.001 | 0.04 | 0.005 | 0.09 | - | - | - | 0.023 |
| 27 | 0.14 | 0.02 | 1.4 | 0.01 | 0.001 | 0.05 | 0.004 | 0.11 | 0.03 | 0.08 | - | 0.050 |
| 28 | 0.09 | 0.05 | 1.1 | 0.02 | 0.002 | 0.05 | 0.005 | 0.05 | 0.02 | - | - | 0.015 |
| 29 | 0.08 | 0.01 | 1.3 | 0.02 | 0.002 | 0.03 | 0.003 | - | 0.11 | - | Mo=0.05, Ta=0.05, W=0.03 | 0.014 |
| 30 | 0.08 | 0.08 | 1.5 | 0.02 | 0.001 | 0.08 | 0.004 | 0.05 | - | 0.05 | Cr=0.2, Ni=0.1, Cu=0.1 | 0.024 |
| 31 | 0.04 | 0.02 | 1.3 | 0.02 | 0.003 | 0.04 | 0.006 | 0.08 | - | - | - | 0.020 |
| 32 | 0.09 | 0.01 | 0.9 | 0.04 | 0.005 | 0.04 | 0.005 | 0.05 | 0.02 | - | Mo=0.05, Ca=0.0015 | 0.015 |
| 33 | 0.12 | 0.09 | 1.7 | 0.08 | 0.002 | 0.09 | 0.003 | - | 0.05 | 0.03 | - | 0.014 |
| 34 | 0.11 | 0.02 | 1.8 | 0.01 | 0.001 | 0.03 | 0.006 | - | 0.02 | 0.10 | - | 0.026 |
| 35 | 0.13 | 0.01 | 1.6 | 0.03 | 0.011 | 0.05 | 0.004 | 0.03 | 0.02 | - | - | 0.010 |
| Note: Formula (1) 12 × (Ti/48+Nb/93+V/51) | | | | | | | | | | | | |

[Table 2]

| Test specimen No. | Steel No. | Hot rolling | | | | | | | | Plating | | | | | | Thickness reduction rate (%) |
|---|---|---|---|---|---|---|---|---|---|---|---|---|---|---|---|---|
| | | Reheating temperature (°C) | Holding time (min) | Cumulative rolling reduction ratio at 1000°C or less | Rolling reduction ratio in final pass | Finishing temperature (°C) | Cooling start time (s) | Average cooling rate in start of cooling-650°C (°C/s) | Coiling temperature (°C) | Soaking temperature (°C) | Soaking time (s) | Average cooling rate in end of annealing-500°C (°C/s) | Plating bath temperature (°C) | Reheating (°C) | Holding time (s) | |
| 1 | 1 | 1180 | 50 | 1.6 | 0.18 | 910 | 1.8 | 90 | 500 | 750 | 60 | 14 | 430 | - | - | - |
| 2 | 2 | 1200 | 60 | 1.2 | 0.17 | 860 | 1.4 | 50 | 580 | 760 | 40 | 14 | 440 | - | - | 1.2 |
| 3 | 3 | 1200 | 30 | 1.8 | 0.15 | 850 | 1.0 | 50 | 550 | 800 | 30 | 10 | 450 | - | - | 1.0 |
| 4 | 4 | 1220 | 30 | 1.1 | 0.15 | 870 | 1.1 | 60 | 550 | 890 | 40 | 12 | 450 | - | - | - |
| 5 | 5 | 1220 | 30 | 1.5 | 0.14 | 810 | 1.2 | 30 | 520 | 740 | 40 | 15 | 440 | - | - | - |
| 6 | 6 | 1230 | 20 | 1.3 | 0.21 | 850 | 1.4 | 40 | 580 | 780 | 220 | 18 | 450 | 510 | 2 | 1.0 |
| 7 | 7 | 1200 | 60 | 1.3 | 0.16 | 940 | 0.9 | 60 | 600 | 730 | 30 | 15 | 450 | 530 | 2 | - |
| 8 | 8 | 1200 | 30 | 1.5 | 0.11 | 880 | 0.7 | 60 | 630 | 820 | 60 | 8 | 450 | 520 | 1 | 0.8 |
| 9 | 9 | 1200 | 30 | 1.5 | 0.14 | 920 | 1.4 | 40 | 550 | 800 | 0.3 | 15 | 450 | - | - | - |
| 10 | 10 | 1220 | 60 | 1.2 | 0.15 | 880 | 1.4 | 60 | 560 | 800 | 30 | 7 | 450 | 500 | 3 | - |
| 11 | 11 | 1170 | 50 | 1.3 | 0.13 | 920 | 0.9 | 110 | 490 | 850 | 80 | 12 | 440 | - | - | - |
| 12 | 12 | 1200 | 60 | 0.9 | 0.14 | 930 | 1.1 | 100 | 530 | 810 | 30 | 17 | 450 | 530 | 2 | 0.3 |
| 13 | 13 | 1250 | 50 | 0.8 | 0.14 | 890 | 0.8 | 20 | 560 | 790 | 150 | 12 | 430 | - | - | 0.9 |
| 14 | 14 | 1190 | 30 | 1.5 | 0.13 | 850 | 1.1 | 60 | 490 | 810 | 60 | 22 | 450 | - | - | - |
| 15 | 15 | 1180 | 40 | 1.4 | 0.13 | 960 | 1.5 | 80 | 430 | 780 | 30 | 16 | 430 | 540 | 1 | 1.3 |
| 16 | 16 | 1250 | 30 | 1.4 | 0.13 | 870 | 0.8 | 30 | 620 | 790 | 150 | 17 | 440 | 530 | 1 | 0.5 |
| 17 | 17 | 1200 | 30 | 1.7 | 0.15 | 910 | 1.1 | 50 | 530 | 730 | 30 | 10 | 430 | - | - | - |
| 18 | 18 | 1220 | 40 | 1.1 | 0.13 | 840 | 1.3 | 30 | 560 | 790 | 50 | 15 | 450 | 580 | 1 | 1.5 |
| 19 | 19 | 1180 | 20 | 1.2 | 0.09 | 850 | 0.8 | 60 | 540 | 840 | 60 | 10 | 460 | 520 | 1 | - |

(continued)

| Test specimen No. | Steel No. | Hot rolling | | | | | | | | Plating | | | | | | Thickness reduction rate (%) |
|---|---|---|---|---|---|---|---|---|---|---|---|---|---|---|---|---|
| | | Reheating temperature (°C) | Holding time (min) | Cumulative rolling reduction ratio at 1000°C or less | Rolling reduction ratio in final pass | Finishing temperature (°C) | Cooling start time (s) | Average cooling rate in start of cooling - 650°C (°C/s) | Coiling temperature (°C) | Soaking temperature (°C) | Soaking time (s) | Average cooling rate in end of annealing-500°C (°C/s) | Plating bath temperature (°C) | Reheating (°C) | Holding time (s) | |
| 20 | 20 | 1210 | 20 | 1.4 | 0.13 | 930 | 1.3 | 70 | 540 | 820 | 320 | 11 | 440 | - | - | 1.2 |
| 21 | 21 | 1220 | 40 | 1.0 | 0.12 | 840 | 1.0 | 40 | 540 | 830 | 60 | 16 | 440 | - | - | 0.8 |
| 22 | 22 | 1210 | 50 | 1.5 | 0.14 | 850 | 1.5 | 60 | 530 | 790 | 80 | 14 | 450 | 520 | 3 | - |
| 23 | 23 | 1170 | 20 | 1.3 | 0.16 | 910 | 2.5 | 50 | 490 | 730 | 50 | 11 | 440 | 530 | 2 | 1.1 |
| 24 | 24 | 1220 | 50 | 0.9 | 0.10 | 830 | 1.7 | 80 | 550 | 830 | 60 | 15 | 440 | - | - | - |
| 25 | 25 | 1150 | 20 | 1.9 | 0.18 | 940 | 0.5 | 180 | 410 | 880 | 10 | 20 | 480 | 580 | 1 | 1.5 |
| 26 | 26 | 1210 | 40 | 1.2 | 0.13 | 920 | 1.0 | 60 | 540 | 830 | 30 | 10 | 430 | 550 | 1 | 1.0 |
| 27 | 27 | 1210 | 40 | 1.5 | 0.12 | 880 | 0.8 | 80 | 480 | 810 | 30 | 8 | 420 | 530 | 2 | 1.0 |
| 28 | 28 | 1220 | 30 | 0.6 | 0.15 | 880 | 0.8 | 50 | 550 | 750 | 30 | 15 | 430 | - | - | 1.1 |
| 29 | 29 | 1230 | 50 | 0.8 | 0.15 | 870 | 1.2 | 40 | 470 | 820 | 60 | 7 | 430 | 520 | 3 | - |
| 30 | 30 | 1200 | 40 | 1.7 | 0.14 | 860 | 1.2 | 50 | 500 | 830 | 220 | 4 | 430 | 550 | 1 | 0.8 |
| 31 | 31 | 1200 | 20 | 1.8 | 0.15 | 880 | 1.1 | 80 | 600 | 700 | 50 | 8 | 420 | - | - | - |
| 32 | 32 | 1210 | 40 | 1.5 | 0.11 | 870 | 1.3 | 100 | 580 | 810 | 60 | 12 | 460 | 520 | 2 | 1.0 |
| 33 | 33 | 1170 | 10 | 0.7 | 0.25 | 910 | 1.9 | 100 | 450 | 850 | 280 | 5 | 470 | 540 | 3 | 2.5 |
| 34 | 34 | 1210 | 50 | 1.3 | 0.26 | 860 | 1.1 | 40 | 480 | 860 | 50 | 12 | 450 | 550 | 1 | - |
| 35 | 35 | 1230 | 40 | 1.3 | 0.17 | 920 | 0.9 | 50 | 380 | 810 | 30 | 9 | 440 | 510 | 3 | - |

[Table 3]

| Test specimen No. | Steel No. | Microstructure | | | | | Sheet thickness (mm) | Mechanical characteristics | | | | Remarks |
|---|---|---|---|---|---|---|---|---|---|---|---|---|
| | | Area Percentage of ferrite (%) | Area percentage of (bainite + martensite) (%) | Average grainsize of ferrite (μm) | Average grain size of (bainite + martensite) (μm) | (Average grain size of (bainite + martensite))/(Average grain size of ferrite) | | YP (MPa) | TS (MPa) | El (%) | Critical bend radius/ thickness | |
| 1 | 1 | 85 | 15 | 5.2 | 0.8 | 0.15 | 3.6 | 750 | 830 | 15 | 1.6 | Example |
| 2 | 2 | 89 | 11 | 3.1 | 1.1 | 0.35 | 2.9 | 720 | 790 | 14 | 3.0 | Comparative example |
| 3 | 3 | 95 | 5 | 6.2 | 1.1 | 0.18 | 2.6 | 550 | 630 | 23 | 1.1 | Example |
| 4 | 4 | 85 | 15 | 11 | 2.9 | 0.26 | 2.4 | 600 | 670 | 19 | 2.9 | Comparative example |
| 5 | 5 | 92 | 8 | 13 | 2.2 | 0.17 | 2.6 | 540 | 630 | 22 | 2.8 | Comparative example |
| 6 | 6 | 90 | 10 | 6.2 | 1.2 | 0.19 | 3.2 | 610 | 690 | 22 | 1.2 | Example |
| 7 | 7 | 93 | 7 | 6.6 | 1.1 | 0.17 | 2.4 | 510 | 580 | 24 | 0.6 | Example |
| 8 | 8 | 93 | 7 | 13 | 1.5 | 0.12 | 2.4 | 540 | 630 | 20 | 3.0 | Comparative example |
| 9 | 9 | 72 | 28 | 5.2 | 0.9 | 0.17 | 2.0 | 650 | 720 | 18 | 2.5 | Comparative example |
| 10 | 10 | 75 | 25 | 6.2 | 1.5 | 0.24 | 2.6 | 610 | 690 | 18 | 2.5 | Comparative example |
| 11 | 11 | 91 | 9 | 11 | 1.2 | 0.11 | 2.0 | 600 | 670 | 20 | 2.2 | Comparative example |
| 12 | 12 | 83 | 17 | 5.2 | 0.8 | 0.15 | 2.4 | 800 | 880 | 13 | 1.7 | Example |
| 13 | 13 | 92 | 8 | 11 | 1.6 | 0.15 | 2.6 | 690 | 760 | 15 | 2.8 | Comparative example |
| 14 | 14 | 78 | 22 | 4.2 | 1.1 | 0.26 | 2.6 | 710 | 800 | 14 | 3.1 | Comparative example |
| 15 | 15 | 95 | 5 | 11 | 1.8 | 0.16 | 2.4 | 510 | 630 | 21 | 2.6 | Comparative example |

(continued)

| Test specimen No. | Steel No. | Microstructure | | | | | | Mechanical characteristics | | | | Remarks |
|---|---|---|---|---|---|---|---|---|---|---|---|---|
| | | Area Percentage of ferrite (%) | Area percentage of (bainite + martensite) (%) | Average grain size of ferrite (μm) | Average grain size of (bainite + martensite) (μm) | (Average grain size of (bainite + martensite))/(Average grain size of ferrite) | Sheet thickness (mm) | YP (MPa) | TS (MPa) | El (%) | Critical bend radius/ thickness | |
| 16 | 16 | 83 | 17 | 4.5 | 0.8 | 0.18 | 2.6 | 750 | 830 | 14 | 1.6 | Example |
| 17 | 17 | 80 | 20 | 4.3 | 1.1 | 0.26 | 2.0 | 780 | 820 | 15 | 1.8 | Example |
| 18 | 18 | 93 | 7 | 5.5 | 1.2 | 0.22 | 2.9 | 600 | 700 | 20 | 1.2 | Example |
| 19 | 19 | 90 | 10 | 5.3 | 1.9 | 0.36 | 1.8 | 580 | 660 | 22 | 3.1 | Comparative example |
| 20 | 20 | 92 | 8 | 13 | 2.5 | 0.19 | 2.6 | 520 | 610 | 20 | 2.6 | Comparative example |
| 21 | 21 | 90 | 10 | 6.3 | 1.3 | 0.21 | 2.2 | 580 | 650 | 23 | 0.9 | Example |
| 22 | 22 | 93 | 7 | 5.8 | 1.2 | 0.21 | 3.2 | 540 | 630 | 24 | 0.7 | Example |
| 23 | 23 | 93 | 7 | 12 | 1.3 | 0.11 | 2.4 | 500 | 580 | 20 | 2.9 | Comparative example |
| 24 | 24 | 90 | 10 | 5.5 | 1.3 | 0.24 | 1.8 | 570 | 640 | 20 | 1.8 | Example |
| 25 | 25 | 95 | 1 | 8.3 | 1.5 | 0.18 | 3.6 | 500 | 580 | 24 | 1.5 | Example |
| 26 | 26 | 94 | 6 | 5.2 | 0.8 | 0.15 | 2.0 | 500 | 620 | 22 | 0.8 | Example |
| 27 | 27 | 92 | 8 | 4.1 | 0.7 | 0.17 | 2.4 | 740 | 810 | 15 | 1.7 | Example |
| 28 | 28 | 92 | 8 | 11 | 2.3 | 0.21 | 2.0 | 550 | 650 | 18 | 2.6 | Comparative example |
| 29 | 29 | 95 | 5 | 5.3 | 1.1 | 0.21 | 2.6 | 750 | 830 | 14 | 1.5 | Example |
| 30 | 30 | 98 | 2 | 11 | 1.1 | 0.10 | 2.4 | 540 | 630 | 20 | 2.3 | Comparative example |
| 31 | 31 | 100 | 0 | 8.3 | 1.3 | 0.16 | 3.2 | 520 | 590 | 17 | 2.3 | Comparative example |

(continued)

| Test specimen No. | Steel No. | Microstructure | | | | | | Mechanical characteristics | | | | Remarks |
|---|---|---|---|---|---|---|---|---|---|---|---|---|
| | | Area Percentage of ferrite (%) | Area percentage of (bainite + martensite) (%) | Average grain size of ferrite (μm) | Average grain size of (bainite + martensite) (μm) | (Average grain size of (bainite + martensite))/ (Average grain size of ferrite) | Sheet thickness (mm) | YP (MPa) | TS (MPa) | El (%) | Critical bend radius/ thickness | |
| 32 | 32 | 98 | 2 | 12 | 1.8 | 0.15 | 2.6 | 530 | 610 | 20 | 2.3 | Comparative example |
| 33 | 33 | 82 | 18 | 9.1 | 2.3 | 0.25 | 2.6 | 540 | 630 | 21 | 1.8 | Example |
| 34 | 34 | 93 | 7 | 2.8 | 1.1 | 0.39 | 2.0 | 610 | 700 | 18 | 3.5 | Comparative example |
| 35 | 35 | 91 | 9 | 6.2 | 3.2 | 0.52 | 2.2 | 530 | 610 | 20 | 3.2 | Comparative example |

Note 1: The average grain size of (bainite + martensite) refers to the average grain size of a phase containing bainite and martensite.

Table 3 shows that the examples provide a high-strength hot-dip galvanized steel sheet with high bendability.

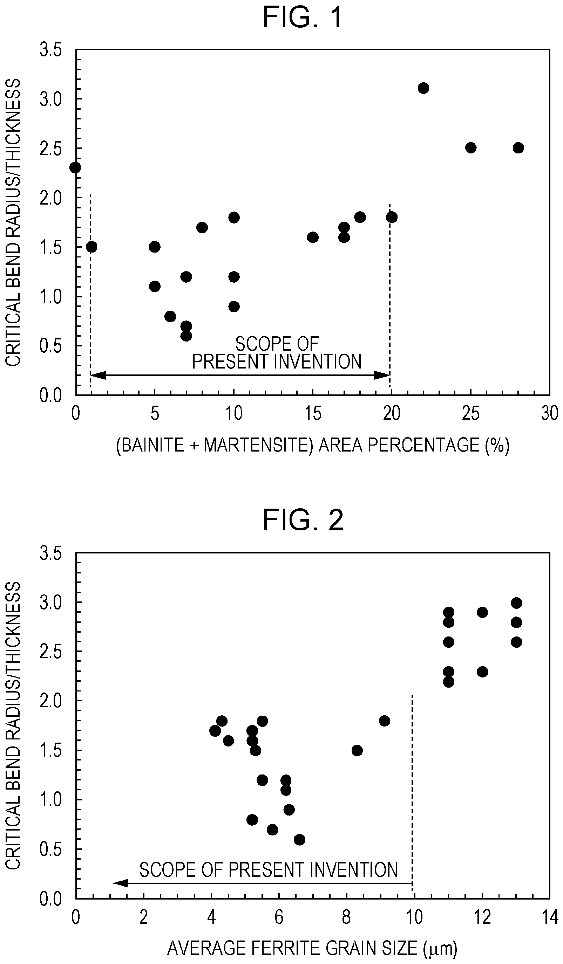

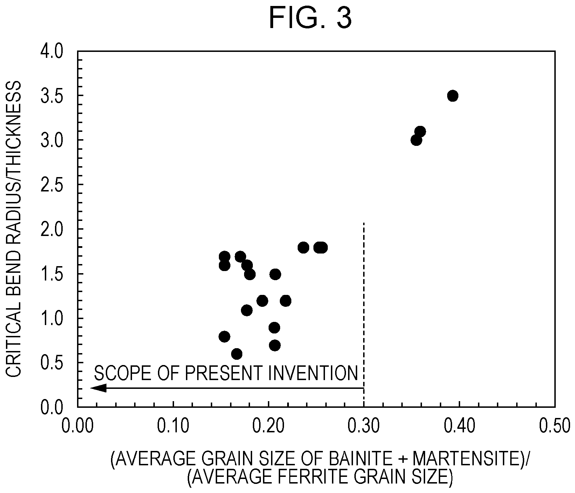

Figs. 1 to 3 summarize the results shown in Table 3. Fig. 1 is a graph showing the relationship between the total area percentage of bainite and martensite and the critical bend radius/thickness ratio. Fig. 2 is a graph showing the relationship between the average ferrite grain size and the critical bend radius/thickness ratio. Fig. 3 is a graph showing the relationship between the average grain size of a phase containing bainite and martensite divided by the average ferrite grain size and the critical bend radius/thickness ratio.

Fig. 1 shows that if the total area percentage of bainite and martensite ranges from 1% to 20%, which is in the scope of the present invention, the critical bend radius/thickness ratio can be 2.0 or less.

Fig. 2 shows that if the average ferrite grain size is 10.0 μm or less, which is in the scope of the present invention, the critical bend radius/thickness ratio can be 2.0 or less.

Fig. 3 shows that if the average grain size of the phase containing bainite and martensite/average ferrite grain size ratio is 0.3 or less, which is in the scope of the present invention, the critical bend radius/thickness ratio can be 2.0 or less.

## Claims

1. A high-strength hot-rolled steel sheet for producing a high-strength hot-dip galvanized steel sheet,
wherein the high-strength hot-rolled steel sheet has
a tensile strength of 550 MPa or more,
a composition which includes, on a mass percent basis,

   C: 0.05% to 0.15%,
   Si: 0.1% or less,
   Mn: 1.0% to 2.0%,
   P: 0.10% or less,
   S: 0.030% or less,
   Al: 0.10% or less, and
   N: 0.010% or less,

one or two or more of Ti, Nb, and V satisfying a formula (1),
optionally B: 0.0005% to 0.0030%,
optionally one or two or more of Mo, Ta, and W: 0.005% to 0.10% each,
optionally one or two or more of Cr, Ni, and Cu: 0.01% to 0.5% each,
optionally one or both of Ca and REM: 0.0005% to 0.01% each, and
optionally Sb: 0.005% to 0.030%,
a remainder being iron and incidental impurities which include Sn, Mg, Co, As, Pb, Zn, and O and constitute, on a mass percent basis, 0.1% or less in total, and a microstructure which contains, on an area percent basis, ferrite: 80% or more, and
bainite and martensite: 1% to 20% in total,
the ferrite has an average grain size of 10.0 μm or less,
a phase containing bainite and martensite has an average grain size of 3.0 μm or less, and
a ratio of the average grain size of the phase containing bainite and martensite to the average grain size of the ferrite is 0.3 or less,

$$0.008\% \leq 12 \times (Ti/48 + Nb/93 + V/51) \leq 0.05\% \quad (1)$$

where Ti, Nb, and V denote their respective contents (% by mass), and in the absence of Ti, Nb, or V, the corresponding content is 0.

2. The high-strength hot-rolled steel sheet for producing a high-strength hot-dip galvanized steel sheet according to Claim 1, wherein the composition includes, on a mass percent basis, B: 0.0005% to 0.0030%.

3. The high-strength hot-rolled steel sheet for producing a high-strength hot-dip galvanized steel sheet according to Claim 1 or 2, wherein the composition includes, on a mass percent basis, one or two or more of Mo, Ta, and W: 0.005% to 0.10% each.

4. The high-strength hot-rolled steel sheet for producing a high-strength hot-dip galvanized steel sheet according to any one of Claims 1 to 3, wherein the composition includes, on a mass percent basis, one or two or more of Cr, Ni, and Cu: 0.01% to 0.5% each.

5. The high-strength hot-rolled steel sheet for producing a high-strength hot-dip galvanized steel sheet according to any one of Claims 1 to 4, wherein the composition includes, on a mass percent basis, one or both of Ca and REM: 0.0005% to 0.01% each.

6. The high-strength hot-rolled steel sheet for producing a high-strength hot-dip galvanized steel sheet according to any one of Claims 1 to 5, wherein the composition includes, on a mass percent basis, Sb: 0.005% to 0.030%.

7. A method for producing a high-strength hot-dip galvanized steel sheet, comprising:

casting a steel slab with the composition according to any one of Claims 1 to 6, and direct-rolling the steel slab or reheating the steel slab to 1150°C or more;
then performing hot rolling, the hot rolling including rough rolling and finish rolling, the finish rolling being performed at a cumulative rolling reduction ratio of 0.7 or more at 1000°C or less, at a rolling reduction ratio of 0.10 to 0.25 in a final pass, and at a finishing temperature of 820°C to 950°C;
within 2 seconds after the finish rolling, performing cooling to 650°C at an average cooling rate of 30°C/s or more;
then performing coiling at a coiling temperature of 400°C to 620°C to form a hot-rolled steel sheet;
then pickling the hot-rolled steel sheet and subsequently annealing the hot-rolled steel sheet at a soaking temperature of 700°C to 880°C for a soaking time of 10 to 300 seconds;
then cooling the steel sheet, an average cooling rate in a temperature range of the soaking temperature to 500°C being 5°C/s to 20°C/s; and
then performing a hot-dip galvanizing treatment.

8. The method for producing a high-strength hot-dip galvanized steel sheet according to Claim 7, further comprising, after the hot-dip galvanizing treatment, performing an alloying treatment at an alloying treatment temperature of 460°C to 600°C for a holding time of 1 second or more.

9. The method for producing a high-strength hot-dip galvanized steel sheet according to Claim 7 or 8, further comprising, after the hot-dip galvanizing treatment or the alloying treatment, performing processing at a thickness reduction rate of 0.1% to 3.0%.

## Patentansprüche

1. Hochfestes warmgewalztes Stahlblech zur Herstellung eines hochfesten feuerverzinkten Stahlblechs,
worin das hochfeste warmgewalzte Stahlblech eine Zugfestigkeit von 550 MPa oder mehr aufweist,
eine Zusammensetzung, in Bezug auf Massenprozent, enthaltend

C: 0,05% bis 0,15%,
Si: 0,1% oder weniger,
Mn: 1,0% bis 2,0%,
P: 0,10% oder weniger,
S: 0,030% oder weniger,
Al: 0,10% oder weniger und
N: 0,010% oder weniger,

eines oder zwei oder mehrere aus Ti, Nb und V, so dass Formel (1) erfüllt ist,
gegebenenfalls B: 0,0005% bis 0,0030%,
gegebenenfalls eines oder zwei oder mehrere aus Mo, Ta und W: jeweils 0,005% bis 0,10%,
gegebenenfalls eines oder zwei oder mehrere aus Cr, Ni und Cu: jeweils 0,01% bis 0,5%,
gegebenenfalls eines oder beide aus Ca und SEM: jeweils 0,0005% bis 0,01% und
gegebenenfalls Sb: 0,005% bis 0,030%,
wobei der Rest Eisen und zufällige Verunreinigungen sind, die Sn, Mg, Co, As, Pb, Zn und O enthalten und, in Bezug auf Massenprozent, insgesamt 0,1% oder weniger ausmachen, und eine Mikrostruktur, in Bezug auf Flächenprozent, enthaltend Ferrit: 80% oder mehr und

Bainit und Martensit: insgesamt 1% bis 20%,
der Ferrit eine durchschnittliche Korngröße von 10,0 μm oder weniger aufweist,
eine Phase, die Bainit und Martensit enthält, eine durchschnittliche Korngröße von 3,0 μm oder weniger aufweist und ein Verhältnis der durchschnittlichen Korngröße der Phase, die Bainit und Martensit enthält, zur durchschnittlichen Korngröße des Ferrits 0,3 oder weniger beträgt,

$$0{,}008\% \leq 12 \times (Ti/48 + Nb/93 + V/51) \leq 0{,}05\% \quad (1)$$

wobei Ti, Nb und V ihren jeweiligen Gehalt (Massen-%) anzeigen und der entsprechende Gehalt in Abwesenheit von Ti, Nb oder V 0 beträgt.

**2.** Hochfestes warmgewalztes Stahlblech zur Herstellung eines hochfesten feuerverzinkten Stahlblechs gemäß Anspruch 1, worin die Zusammensetzung, in Bezug auf Massenprozent, B: 0,0005% bis 0,0030% enthält.

**3.** Hochfestes warmgewalztes Stahlblech zur Herstellung eines hochfesten feuerverzinkten Stahlblechs gemäß Anspruch 1 oder 2, worin die Zusammensetzung, in Bezug auf Massenprozent, eines oder zwei oder mehrere aus Mo, Ta und W: jeweils 0,005% bis 0,10% enthält.

**4.** Hochfestes warmgewalztes Stahlblech zur Herstellung eines hochfesten feuerverzinkten Stahlblechs gemäß einem der Ansprüche 1 bis 3, worin die Zusammensetzung, in Bezug auf Massenprozent, eines oder zwei oder mehrere aus Cr, Ni und Cu: jeweils 0,01% bis 0,5% enthält.

**5.** Hochfestes warmgewalztes Stahlblech zur Herstellung eines hochfesten feuerverzinkten Stahlblechs gemäß einem der Ansprüche 1 bis 4, worin die Zusammensetzung, in Bezug auf Massenprozent, eines oder beide aus Ca und SEM: jeweils 0,0005% bis 0,01% enthält.

**6.** Hochfestes warmgewalztes Stahlblech zur Herstellung eines hochfesten feuerverzinkten Stahlblechs gemäß einem der Ansprüche 1 bis 5, worin die Zusammensetzung, in Bezug auf Massenprozent, Sb: 0,005% bis 0,030% enthält.

**7.** Verfahren zur Herstellung eines hochfesten feuerverzinkten Stahlblechs, umfassend:

das Gießen einer Stahlbramme mit der Zusammensetzung gemäß einem der Ansprüche 1 bis 6, und das Direktwalzen der Stahlbramme oder das Wiedererwärmen der Stahlbramme auf 1150°C oder mehr;
anschließend das Durchführen von Warmwalzen, wobei das Warmwalzen Vorwalzen und Endwalzen umfasst, wobei das Endwalzen bei einer kumulativen Walzreduktionsrate von 0,7 oder mehr bei 1000°C oder weniger bei einer Walzreduktionsrate von 0,10 bis 0,25 im letzten Durchgang und bei einer Endtemperatur von 820°C bis 950°C durchgeführt wird;
innerhalb von 2 Sekunden nach dem Endwalzen das Durchführen von Abkühlen auf 650°C bei einer durchschnittlichen Abkühlgeschwindigkeit von 30°C/s oder mehr;
anschließend das Durchführen von Aufrollen bei einer Aufrolltemperatur von 400°C bis 620°C, so dass ein warmgewalztes Stahlblech gebildet wird;
anschließend das Beizen des warmgewalzten Stahlblechs und danach das Glühen des warmgewalzten Stahlblechs bei einer Durchwärmtemperatur von 700°C bis 880°C für eine Durchwärmzeit von 10 bis 300 Sekunden;
anschließend das Abkühlen des Stahlblechs, wobei eine durchschnittliche Abkühlgeschwindigkeit in einem Temperaturbereich von der Durchwärmtemperatur bis 500°C 5°C/s bis 20°C/s beträgt; und
anschließend das Durchführen einer Feuerverzinkungsbehandlung.

**8.** Verfahren zur Herstellung eines hochfesten feuerverzinkten Stahlblechs gemäß Anspruch 7, ferner umfassend das Durchführen einer Legierungsbehandlung bei einer Legierungsbehandlungstemperatur von 460°C bis 600°C für eine Haltezeit von 1 Sekunde oder mehr nach der Feuerverzinkungsbehandlung.

**9.** Verfahren zur Herstellung eines hochfesten feuerverzinkten Stahlblechs gemäß Anspruch 7 oder 8, ferner umfassend das Durchführen von Verarbeiten bei einer Dickenreduktionsrate von 0,1% bis 3,0% nach der Feuerverzinkungsbehandlung oder der Legierungsbehandlung.

## Revendications

1. Tôle d'acier à haute résistance laminée à chaud pour produire une tôle d'acier à haute résistance galvanisée par immersion à chaud,
dans laquelle la tôle d'acier à haute résistance laminée à chaud présente une résistance à la traction de 550 MPa ou plus,
une composition qui inclut, sur une base de pour cent en masse,

    C : de 0,05 % à 0,15 %,
    Si : 0,1 % ou moins,
    Mn : de 1,0 % à 2,0 %,
    P : 0,10 % ou moins,
    S : 0,030 % ou moins,
    Al : 0,10 % ou moins, et
    N : 0,010 % ou moins,

un ou deux ou plus de Ti, Nb, et V satisfont à une formule (1),
facultativement B : de 0,0005 % à 0,0030 %,
facultativement un ou deux ou plus de Mo, Ta, et W : de 0,005 % à 0,10 % chacun, facultativement un ou deux ou plus de Cr, Ni, et Cu : de 0,01 % à 0,5 % chacun, facultativement un ou les deux de Ca et REM : de 0,0005 % à 0,01 % chacun, et facultativement Sb : de 0,005 % à 0,030 %,
un reste étant du fer et des impuretés accidentelles qui incluent Sn, Mg, Co, As, Pb, Zn, et O et constituent, sur une base de pour cent en masse, 0,1 % ou moins au total, et une microstructure qui contient, sur une base de pour cent de surface, une ferrite : 80 % ou plus, et
une bainite et une martensite : de 1 % à 20 % au total,
la ferrite présente une taille de grain moyenne de 10,0 μm ou moins,
une phase contenant une bainite et une martensite présente une taille de grain moyenne de 3,0 μm ou moins, et un rapport entre la taille de grain moyenne de la phase contenant une bainite et une martensite et la taille de grain moyenne de la ferrite est 0,3 ou moins,

$$0{,}008\,\% \leq 12 \times (Ti/48 + Nb/93 + V/51) \leq 0{,}05\,\% \qquad (1)$$

où Ti, Nb et V désignent leurs teneurs respectives (en % en masse), et en l'absence de Ti, Nb, ou V, la teneur correspondante est 0.

2. Tôle d'acier à haute résistance laminée à chaud pour produire une tôle d'acier à haute résistance galvanisée par immersion à chaud selon la revendication 1, dans laquelle la composition inclut, sur une base de pour cent en masse, B : de 0,0005 % à 0,0030 %.

3. Tôle d'acier à haute résistance laminée à chaud pour produire une tôle d'acier à haute résistance galvanisée par immersion à chaud selon la revendication 1 ou 2, dans laquelle la composition inclut, sur une base de pour cent en masse, un ou deux ou plus de Mo, Ta, et W : de 0,005 % à 0,10 % chacun.

4. Tôle d'acier à haute résistance laminée à chaud pour produire une tôle d'acier à haute résistance galvanisée par immersion à chaud selon l'une quelconque des revendications 1 à 3, dans laquelle la composition inclut, sur une base de pour cent en masse, un ou deux ou plus de Cr, Ni, et Cu : de 0,01 % à 0,5 % chacun.

5. Tôle d'acier à haute résistance laminée à chaud pour produire une tôle d'acier à haute résistance galvanisée par immersion à chaud selon l'une quelconque des revendications 1 à 4, dans laquelle la composition inclut, sur une base de pour cent en masse, un ou les deux de Ca et REM : de 0,0005 % à 0,01 % chacun.

6. Tôle d'acier à haute résistance laminée à chaud pour produire une tôle d'acier à haute résistance galvanisée par immersion à chaud selon l'une quelconque des revendications 1 à 5, dans laquelle la composition inclut, sur une base de pour cent en masse, Sb : de 0,005 % à 0,030 %.

7. Procédé de production d'une tôle d'acier à haute résistance galvanisée par immersion à chaud, comprenant les étapes consistant à :

couler une brame d'acier avec la composition selon l'une quelconque des revendications 1 à 6, et laminer directement la brame d'acier ou chauffer à nouveau la brame d'acier à 1 150 °C ou plus ;
effectuer ensuite un laminage à chaud, le laminage à chaud incluant un laminage brut et un laminage de finition, le laminage de finition étant effectué à un rapport de réduction de laminage cumulatif de 0,7 ou plus à 1000 °C ou moins, à un rapport de réduction de laminage de 0,10 à 0,25 dans une passe finale, et à une température de finition de 820 °C à 950 C ;
dans les 2 secondes après le laminage de finition, effectuer un refroidissement à 650 °C à une vitesse de refroidissement moyenne de 30 °C/s ou plus ;
ensuite effectuer un bobinage à une température de bobinage de 400 °C à 620 °C pour former une tôle d'acier laminée à chaud ;
ensuite décaper la tôle d'acier laminée à chaud et recuire ultérieurement la tôle d'acier laminée à chaud à une température de trempage de 700 °C à 880 °C pendant une durée de trempage de 10 à 300 secondes ;
ensuite refroidir la tôle d'acier, une vitesse de refroidissement moyenne dans une plage de températures de la température de trempage à 500 °C étant de 5 °C/s à 20 °C/s ; et
ensuite effectuer un traitement de galvanisation par immersion à chaud.

**8.** Procédé de production d'une tôle d'acier à haute résistance galvanisée par immersion à chaud selon la revendication 7, comprenant en outre, après le traitement de galvanisation par immersion à chaud, l'étape consistant à effectuer un traitement d'alliage à une température de traitement d'alliage de 460 °C à 600 °C pendant une durée de maintien de 1 seconde ou plus.

**9.** Procédé de production d'une tôle d'acier à haute résistance galvanisée par immersion à chaud selon la revendication 7 ou 8, comprenant en outre, après le traitement de galvanisation par immersion à chaud ou le traitement d'alliage, l'étape consistant à effectuer un traitement à une vitesse de réduction d'épaisseur de 0,1 % à 3,0%.

FIG. 1

3.5
3.0
2.5
2.0
1.5
1.0
0.5
0.0
CRITICAL BEND RADIUS/THICKNESS
SCOPE OF
PRESENT INVENTION
0
5
10
15
20
25
30
(BAINITE + MARTENSITE) AREA PERCENTAGE (%)

FIG. 2

3.5
3.0
2.5
2.0
1.5
1.0
0.5
0.0
CRITICAL BEND RADIUS/THICKNESS
SCOPE OF PRESENT INVENTION
0
2
4
6
8
10
12
14
AVERAGE FERRITE GRAIN SIZE (μm)

FIG. 3

CRITICAL BEND RADIUS/THICKNESS
4.0
3.5
3.0
2.5
2.0
1.5
1.0
0.5
0.0
SCOPE OF PRESENT INVENTION
0.00
0.10
0.20
0.30
0.40
0.50
(AVERAGE GRAIN SIZE OF BAINITE + MARTENSITE)/
(AVERAGE FERRITE GRAIN SIZE)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000212686 A
- JP 2011241456 A
- JP 2012036441 A
- JP 2015063731 A
- EP 2826881 A1